# EUROPÄISCHE PATENTSCHRIFT

(11) **EP 0 917 861 B1**
(45) Veröffentlichungstag und Bekanntmachung des Hinweises auf die Patenterteilung: **02.01.2004**
(21) Anmeldenummer: 97810872.8
(22) Anmeldetag: 17.11.1997
(51) Int. Cl.: A61C 13/265, A61C 13/273

(54) **Konstruktionselemente für die Dentalprothetik**
Construction elements for dental prosthetics
Eléments de construction pour prothèses dentaires

(43) Veröffentlichungstag der Anmeldung: 26.05.1999
(73) Patentinhaber: CENDRES ET METAUX S.A., CH-2501 Bienne (CH)
(72) Erfinder: Blümli, Markus, 2501 Biel/Bienne (CH); Guenat, Jean-Marc, 2501 Biel/Bienne (CH); Studer, Jean-Fred, 2501 Biel/Bienne (CH); Wermuth, Walter, 2501 Biel/Bienne (CH)
(74) Vertreter: AMMANN PATENTANWAELTE AG BERN

(56) Entgegenhaltungen:
- EP-A- 0 298 909
- WO-A-97/25172
- DE-C- 3 608 372

## Beschreibung

Die vorliegende Erfindung bezieht sich auf Konstruktionselemente für die Dentalprothetik gemäss Oberbegriff von Patentanspruch 1 und insbesondere auch auf ein Geschiebe mit einer transversalen Blockierungsschraube.

Ein zahntechnisches Geschiebe gemäss Oberbegriff von Patentanspruch 1 ist der DE-C1-36 08 372 offenbart. Auf die Problematik beim Angiessen einer Legierung bei einem Geschiebe mit transversaler Blockierungsschraube wird dort nicht eingegangen.

Bei der überwiegenden Mehrzahl von Geschieben mit Blockierungsschrauben sind diese vertikal angeordnet, da ein vertikaler Gewindegang weniger Probleme beim Angiessen von beispielsweise einer Legierung um das zu verankernde Teil des Geschiebes verursacht.

Bei der Verwendung einer horizontalen Blockierungsschraube besteht die Gefahr, dass beim Angiessen einer Legierung Material in das Gehäuse und insbesondere in den Schraubengang gelangt und so einerseits das Herausnehmen der Angiessschraube behindert und andererseits das Einführen und Einschrauben der Blockierungsschraube behindert oder verunmöglicht. Solche Behinderungen und Ueberlegungen spielen nicht nur bei Geschieben sondern auch für die verschiedenartigsten Konstruktionselemente für die Dentalprothetik eine Rolle.

Es ist von diesem bekannten Stand der Technik ausgehend Aufgabe der Erfindung Massnahmen vorzusehen, um bei Konstruktionselementen, die mittels einer transversalen Blockierungsschraube zusammengehalten werden, das Eindringen einer Gusslegierung in das Gehäuse und insbesondere in die Gewindegänge zu verhindern.

Diese Aufgabe wird mit Konstruktionselementen gemäss Patentanspruch 1 gelöst. In einer bevorzugten Ausführung besitzen die Oeffnung am Gehäuse und die Angiess- und die Blockierungsschraube eine damit zusammenwirkende konische Dichtungsfläche, um eine gute Abdichtung gegenüber der Giesslegierung zu erzielen. Weitere Vorteile und Ausführungsformen sind in den abhängigen Ansprüchen beschrieben und definiert.

Die Erfindung wird im folgenden anhand einer Zeichnung eines Ausführungsbeispiels näher erläutert werden.
- Figur 1: zeigt in perspektivischer Sicht und teilweise geschnitten eine Patrize und eine daran befestigte Matrize eines Geschiebes;
- Figur 2: zeigt in perspektivischer Sicht die Patrize, und
- Figur 3: zeigt, teilweise geschnitten, die Matrize mit einer Angiess- und einer Blockierungsschraube.

Die Erfindung wird nun unter Bezugnahme auf ein Geschiebe mit einer Patrize und einer Matrize näher erläutert. Die Patrize 1 ist fast identisch mit derjenigen gemäss EP-B-659 063 des gleichen Anmelders und besteht aus einem Retentionsteil 2, das einen über einen Steg 3 mit dem Befestigungsteil 4 verbundenen Kreiszylinder 5 aufweist. Das Befestigungsteil 4 besitzt im wesentlichen die Form eines Blockes, der eine zahnseitige Befestigungsnut 6 und an den Seitenflächen je eine Stabilisierungsnut 7 aufweist. Zwischen dem Befestigungsteil 4 und dem Retentionsteil 2 befindet sich eine ebene Stabilisierungsfläche 8. Die frontal seitliche Abschlussfläche 9 am Befestigungsteil 4 vor der Stabilisierungsnut 7 bildet ebenfalls eine Stabilisierungsfläche. Zusätzlich zu der offenbarten Patrize besitzt die vorliegende Patrize an der der Befestigungsnut 6 entgegengesetzten Seite eine Quernut 10, um einen Teil der Blockierungs- oder Angiessschraube aufzunehmen.

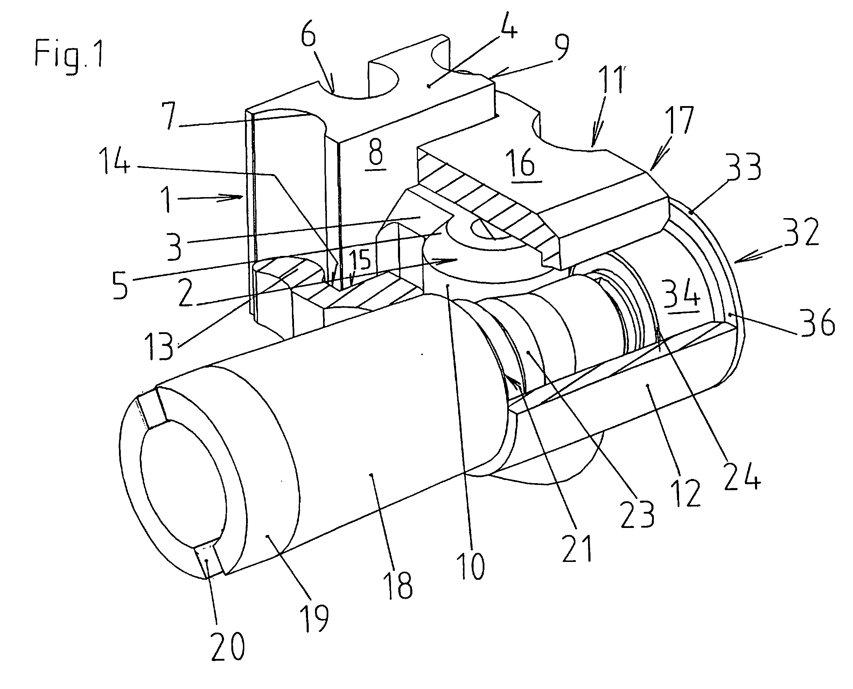

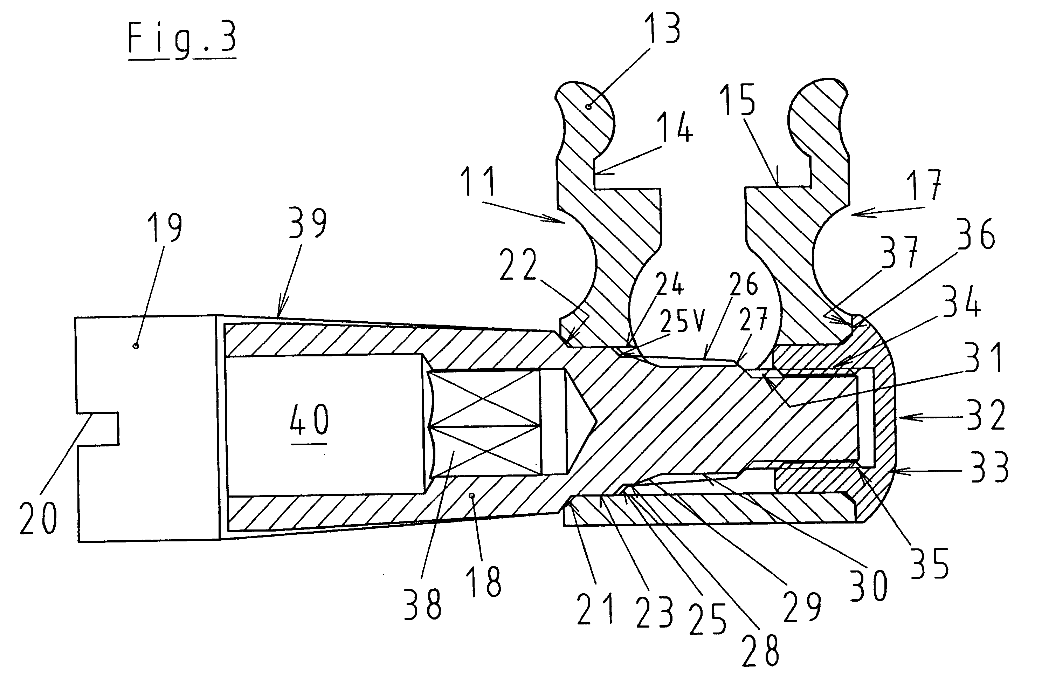

Die als Gehäuse ausgebildete Matrize 11 von Figur 1 oder 3 weist eine Ringwandung 12, Verbindungsleisten 13 und ebene Anlageflächen 14 und 15 auf, wobei die Innenflächen dieser Verbindungsteile genau den Aussenflächen des Retentionsteils der Patrize entsprechen und die Verbindungsleisten 13 mit den Stabilisierungsnuten 7 an der Patrize zusammenarbeiten. Die Anlageflächen 14 und 15 kommen beim Eingliedern des Geschiebes an die entsprechenden Stabilisierungsflächen 8 und 9 der Patrize zur Anlage. Ausserdem besitzt die Matrize eine obere Abschlusswandung 16, wodurch die Matrize die Form eines Gehäuses 17 erhält. Das vorliegende Geschiebe, das heisst die Patrize und die Matrize, besitzen die in vorgängig genannnter europäischer Patentschrift 659 063 beschriebenen Vorteile, insbesondere, dass infolge des integrierten Schubverteilers kein Umlauf erforderlich ist und auch keine sogenannte Umlauffräsung vorgenommen werden muss und somit sämtliche Teile nicht individuell erzeugt und angepasst werden müssen.

In Abweichung von dem Geschiebe gemäss zitiertem EP-B-659 063-Patent wird die Matrize nicht mittels einem Friktionsteil an der Patrize befestigt, sondern mittels einer Blockierungsschraube 18. Eine transversal angreifende Schraube ist bereits aus der EP-B-298 909 des gleichen Anmelders bekannt, doch dient diese Schraube als Aktivierungsschraube, um Druck auf einen Kunststoffeinsatz auszuüben, der die Retention der Matrize an der Patrize bewirkt.

Im Schnitt gemäss Figur 3 sind zwei Schrauben 18 und 19 dargestellt, wobei die grössere Schraube 19 die sogenannte Angiessschraube ist, die beim Giessen der Legierung um das Matrizengehäuse 17 verwendet wird und die dann beim fertigen Geschiebe durch die Blockierungsschraube 18 ersetzt wird. Die Angiessschraube 19 besitzt zum Eindrehen einen Schlitz 20, während die Blockierungsschraube 18 vorzugsweise einen Innensechskant 38 aufweist, doch kann dies auch ohne weiteres umgekehrt der Fall sein, oder irgendein anderes Eingriffsmittel sein. Der Griffteil 39 mit dem Schlitz 20 der Angiessschraube 19 weitet sich ausserhalb des Gehäuses 17 von der Dichtungsfläche 21 gegen das Ende hin konisch aus, um nach dem Angiessen der Legierung ein leichtes Herausdrehen zu gewährleisten.

Die Blockierungsschraube 18 weist eine geringere Konizität auf, um in jedem Fall im erzeugten Raum gut sitzen zu können. Des weiteren befindet sich der Innensechskant 38 im Inneren der Schraube, nach einem Hohlraum 40, um die Blockierungsschraube gegebenenfalls kürzen zu können, ohne den Innensechskant zu beschädigen.

Vom Eingriffsende mit Schlitz 20 oder Innensechskant aus gesehen, weisen beide Schrauben zuerst eine konische Dichtungsfläche 21 auf, die mit einer ebenfalls konischen Dichtungsfläche 22 beidseitig der durchgehenden Bohrung 24 durch das Gehäuse 17 zusammenarbeitet. Es ist einleuchtend, dass zwecks guter Abdichtung die Schrauben gut angezogen sein müssen.

Der Dichtungsfläche 21 an den Schrauben schliesst sich ein zylindrisches Teil 23 an, das in die zylindrische Bohrung 24 greift. Diesem zylindrischen Teil 23 schliesst sich ein zweiter Konus 25 an, der bei der Angiessschraube einen leicht grösseren Durchmesser aufweist als bei der Blockierungsschraube, dort mit 25V bezeichnet.

Nach diesem Konus 25 besitzt die Angiessschraube eine konisch verlaufende Fläche 26, um dann in einen Konus 27 überzugehen, während die Blockierungsschraube 18 eine weitere kurze zylindrische Fläche 28 und eine anschliessende konische Verriegelungsfläche 29 besitzt, der sich eine zylindrische Fläche 30 anschliesst, die in den Konus 27 übergeht.

Die Verwendung einer Angiessschraube mit teilweise verschiedenen, grösseren Durchmessern als bei der Blockierungsschraube verhindert, dass letztere durch irgendwelche immer noch möglichen Verunreinigungen behindert wird. Während die erste Dichtungsfläche 21 das Eindringen der Gusslegierung in das Innere der Matrize verhindert, bewirkt die konische Verriegelungsfläche 29 an der Blockierungsschraube über die Quernut 10 an der Patrize deren zusätzliche Verriegelung, bzw. sie verhindert eine Lockerung der Prothese. An ihrem vorderen Ende besitzen beide Schrauben 18 und 19 das gleiche Gewinde 31.

In vorliegendem Ausführungsbeispiel werden die Schrauben nicht direkt in das Gehäuse der Matrize geschraubt, sondern in ein Verschlussdeckel 32, der ein Abschlussteil 33 und ein zylindrisches Teil 34 aufweist, wobei der Durchmesser des zylindrischen Teils 34 der gleiche ist wie der Durchmesser des zylindrischen Teils 23 an den Schrauben 18 oder 19 und somit in die durchgehende Bohrung 24 passt.

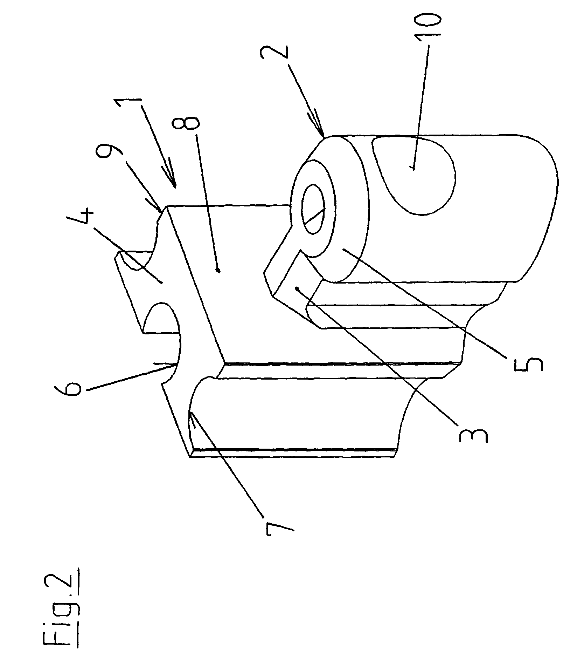

Daraus ist ersichtlich, dass die beiden Schrauben sowohl von links wie in Figur 2 gezeigt, als auch von der anderen Seite, das heisst in Figur 2 von rechts, im Verschlussdeckel befestigt werden können, so dass die Matrize sowohl rechts als auch links anwendbar ist. Der Verschlussdeckel 32 weist ein Innengewinde 35 auf, das dem Gewinde 31 an den Schrauben entspricht. Der Abschluss mit grösserem Durchmesser stützt sich mit einer Schulter 36 auf eine entsprechende Fläche 37 am Gehäuse auf. Die Schulter 36 und die entsprechende Fläche 37 am Gehäuse bilden im vorliegenden Beispiel mit Deckel neben den Dichtungsflächen 21 und 22 die zweite Dichtungsfläche, durch die keine Legierung eindringt falls der durch die Angiessschraube erzeugte Druck korrekt ist. Der Verschlussdeckel ermöglicht die Herstellung von Matrizen unabhängig von der Lage, in der sie eingesetzt werden müssen, und senkt somit die Herstellungs- und Lagerhaltungskosten.

Dadurch, dass die Schrauben nur im vorderen Teil ein Gewinde aufweisen, wird bei deren Einschrauben die Dichtungsfläche 21 fest auf die entsprechende Dichtungsfläche 22 der Bohrung 24 gepresst, womit eine vollständige Abdichtung des Innenraums des Matrizengehäuses beim Angiessen gewährleistet wird. Ausserdem gewährleistet dieses feste Anziehen von zwei konischen Flächen aufeinander eine feste Verbindung zwischen den beiden Teilen, das heisst zwischen der Matrize und der Patrize und somit ein vollständig spielfreies Befestigen des Prothesenzahnes. Dabei können die Dichtungsflächen eine gleiche oder eine unterschiedliche Steigung besitzen.

Falls nur eine einseitige Befestigung erwünscht ist, wird anstatt des Verschlussdeckels ein Innengewinde im Matrizengehäuse vorgesehen, so dass bei übrigen gleichen Teilen der Schrauben die gleiche sichere und dichte Befestigung gewährleistet ist. Anstatt einer durchgehenden Bohrung im Gehäuse ist dann ein Sackloch mit einem Gewinde im der Oeffnung entgegengesetzten Ende erforderlich.

Um die angebrachte Vorspannung während dem Anguss auf dem Gehäuse zu behalten, sollte der Wärmeausdehnungskoeffizient vom verwendeten Schraubenmaterial etwa gleich oder kleiner sein als der Wärmeausdehnungskoeffizient vom Gehäuse. Vorzugsweise wird die Matrize aus einer Pd- und Cu-freien, angussfähigen Edelmetalllegierung gefertigt. Diese lässt sich mit allen üblichen Edelmetalllegierungen angiessen. Die Patrize wird ebenfalls aus der gleichen angussfähigen Edelmetalllegierung gefertigt. Die Angiessschraube 19 wird vorzugsweise aus Titan und die Blockierungsschraube 18 aus Reintitan gefertigt, während für den Verschlussdeckel die gleiche Edelmetalllegierung wie oben erwähnt verwendet werden kann.

Durch diese Konstruktion ist eine einfache Umbaubarkeit gewährleistet und diese kann sehr einfach und vielfältig durchgeführt werden. Dazu braucht es nur das Entfernen der Blockierungsschraube inklusive Sekundärkonstruktion und das Aufsetzen einer anderen Matrize.

## Patentansprüche

1. Konstruktionselemente für die Dentalprothetik, mit einem an einem Festzahn anbringbaren ersten Teil und einem über eine transversale Blockierungsschraube daran verankerbaren, zweiten Teil, wobei das verankerbare zweite Teil ein Gehäuse (17) mit einer Oeffnung zur Aufnahme der Blockierungsschraube (18) aufweist und an das Gehäuse eine Legierung angiessbar ist, **dadurch gekennzeichnet, dass** die Konstruktionselemente eine Angiessschraube (19) enthalten und beim Giessen der Legierung anstatt der Blockierungsschraube die Angiessschraube (19) verwendet wird, dass sowohl die Oeffnung im Gehäuse (17) als auch die Angiessschraube (19) je eine Dichtungsfläche (22, bzw. 21) aufweisen, um zu verhindern, dass beim Angiessen Legierung in das Innere des Gehäuses des zu verankernden Teils und in die Schraubgewinde (31, 35) gelangt, und dass die Blockierungsschraube (18) ebenfalls eine Dichtungsfläche (21) besitzt.

2. Konstruktionselemente nach Anspruch 1, **dadurch gekennzeichnet, dass** sich das Gewinde (31) an der Blockierungs- und an der Angiessschraube (18, 19) bei deren Spitze befindet und von der Dichtungsfläche (21) beabstandet ist.

3. Konstruktionselemente nach Anspruch 1 oder 2, **dadurch gekennzeichnet, dass** die Dichtungsfläche (22) an der Oeffnung des Gehäuses (17) und die Dichtungsfläche (21) an der Blockierungs- und an der Angiessschraube (18, 19) konisch sind.

4. Konstruktionselemente nach einem der Ansprüche 1 bis 3, **dadurch gekennzeichnet, dass** sie ein extracoronales Geschiebe mit integriertem Schubverteiler mit einer an einen Festzahn anbringbaren Patrize (1) und einer auf die Patrize schiebbaren Matrize (11) in Form eines Gehäuses (17), an dem ein Prothesenteil anbringbar ist, enthalten, wobei die Patrize (1) ein im wesentlichen blockförmiges Befestigungsteil (4) mit einer zahnseitigen Befestigungsnut (6) und an den Seitenflächen je eine Stabilisierungsnut (7) sowie an der der Befestigungsnut (6) entgegengesetzten Seite eine Quernut (10) für die Blockierungs- oder Angiessschraube (18, 19) und die Matrize (11) eine Ringwandung (12) und mit den Stabilisierungsnuten (7) zusammenwirkende Verbindungsleisten (13) aufweist, und die Blockierungs- oder die Angiessschraube (18, 19) im Matrizengehäuse (17) einschraubbar ist.

5. Konstruktionselemente nach Anspruch 4, **dadurch gekennzeichnet, dass** die Oeffnung im Gehäuse (17) eine durchgehende Bohrung (24) zur wahlweise beidseitigen Aufnahme der Blockierungsoder der Angiessschraube (18, 19) ist und diese Bohrung durch einen Verschlussdeckel (32) mit einem Innengewinde (35) zur Aufnahme des Gewindes (31) an der Blockierungsoder an der Angiessschraube (18, 19) verschlossen ist.

6. Konstruktionselemente nach Anspruch 5, **dadurch gekennzeichnet, dass** der Deckel eine Schulter (36) und das Gehäuse eine entsprechende Fläche (37) aufweisen, um, zusammen mit den Dichtungsflächen (21, 22) an der Angiessschraube und an der Gehäuse-Oeffnung zu verhindern, dass Material in das Innere des Gehäuses gelangt.

7. Konstruktionselemente nach Anspruch 4, **dadurch gekennzeichnet, dass** die Oeffnung im Gehäuse (17) ein Sackloch mit Innengewinde an seinem Ende zur Aufnahme der Blockierungsoder der Angiessschraube (18, 19) ist.

8. Konstruktionselemente nach einem der Ansprüche 4 bis 7, **dadurch gekennzeichnet, dass** die Blockierungsschraube (18) ein Mittelteil mit einer konischen Verriegelungsfläche (29) mit anschliessender zylindrischer Fläche (30) zum Zusammenwirken mit der Quernut (10) an der Patrize (1) aufweist.

9. Konstruktionselemente nach einem der Ansprüche 4 bis 8, **dadurch gekennzeichnet, dass** die Angiessschraube (19) ein Griffteil (39) aufweist, das sich von der Dichtungsfläche (21) aus konisch zum Ende hin erweitert.

10. Konstruktionselemente nach einem der Ansprüche 4 bis 9, **dadurch gekennzeichnet, dass** die Schrauben, insbesondere die Angiessschraube (19), einen gleichen oder kleineren Wärmeausdehnungskoeffizienten aufweisen als das Gehäuse.

11. Konstruktionselemente nach einem der Ansprüche 4 bis 10, **dadurch gekennzeichnet, dass** die Patrize (1), die Matrize (11) und der Verschlussdeckel (32) aus einer Pd- und Cu-freien, angussfähigen Edelmetalllegierung und die Blockierungsschraube (18) aus Reintitan gefertigt sind.

## Claims

1. Construction elements for dental prosthetics, comprising a first part that is attachable to a fixed tooth and a second part that is adapted to be anchored thereon by means of a transversal locking screw, the anchorable second part comprising a housing (17) provided with an opening for receiving the locking screw (18) and the housing being appropriate for casting on an alloy, **characterised in that** the construction elements include a casting screw (19) and the casting screw (19) is used instead of the locking screw while the alloy is being cast, **in that** both the opening in the housing (17) and the casting screw (19) comprise a respective sealing surface (22, resp. 21) in order to prevent that the alloy may enter into the interior of the housing of the anchored part and into the screw threads (31, 35) during casting-on, and **in that** the locking screw (18) comprises a sealing surface (21) as well.

2. Construction elements according to claim 1, **characterised in that** the threaded portion (31) of the locking screw and of the casting screw (18, 19) is located at the tip thereof and at a distance from the sealing surface (21).

3. Construction elements according to claim 1 or 2, **characterised in that** the sealing surface (22) at the opening of the housing (17) and the sealing surface (21) on the locking screw and on the casting screw (18, 19) are conical.

4. Construction elements according to one of claims 1 to 3, **characterised in that** they include an extracoronal slide attachment with an integrated shearing force distributor, comprising a male part (1) adapted to be fastened to a fixed tooth and a female part (11) that is slidable onto the male part and has the form of a housing (17) to which a prosthetic part is attachable, the male part including an essentially block-shaped fastening part (4) comprising a fastening groove (6) on the tooth side and respective stabilising grooves (7) on the lateral surfaces as well as a transversal groove (10) for the locking or casting screw (18, 19) on the side opposite the fastening groove (6), and the female part (11) comprising an annular wall portion (12) and connecting ledges (13) cooperating with the stabilising grooves (7), and the locking or casting screw (18, 19) being adapted to be screwed into the housing (17) of the female part.

5. Construction elements according to claim 4, **characterised in that** the opening in the housing (17) is a through-going bore (24) for selectively receiving the locking or the casting screw (18, 19) on either side thereof, and **in that** this bore is sealed by a sealing lid (32) having an internal thread (35) for receiving the threaded portion (31) of the locking or the casting screw (18, 19) .

6. Construction elements according to claim 5, **characterised in that** the lid comprises a shoulder (36) and the housing a corresponding surface (37) to prevent, together with the sealing surfaces (21, 22) provided on the casting screw and on the housing opening, that material may enter into the interior of the housing.

7. Construction elements according to claim 4, **characterised in that** the opening in the housing (17) is a blind hole whose end is provided with an internal thread for receiving the locking or the casting screw (18, 19).

8. Construction elements according to one of claims 4 to 7, **characterised in that** the locking screw (18) includes a central portion with a conical locking surface (29) and a following cylindrical surface (30) intended to cooperate with the transversal groove (10) of the male part (1).

9. Construction elements according to one of claims 4 to 8, **characterised in that** the casting screw (19) comprises a handle portion (39) that is enlarged from the sealing surface (21) towards the end.

10. Construction elements according to one of claims 4 to 9, **characterised in that** the screws, more particularly the casting screw (19), have the same or a smaller thermal expansion coefficient than the housing.

11. Construction elements according to one of claims 4 to 10, **characterised in that** the male part (1), the female part (11) and the sealing lid (32) are made of a palladium- and copper-free noble metal alloy for casting-on and the locking screw (18) of pure titanium.

## Revendications

1. Eléments de construction pour prothèses dentaires, comprenant une première partie attachable à une dent fixe et une deuxième partie pouvant être ancrée sur ladite première partie au moyen d'une vis de blocage transversale, la deuxième partie, destinée à l'ancrage, comportant un boîtier (17) muni d'une ouverture pour recevoir la vis de blocage (18), et un alliage pouvant être coulé sur le boîtier, **caractérisés en ce que** les éléments de construction comprennent une vis pour coulée (19) et que la vis pour coulée (19) est utilisée au lieu de la vis de blocage pendant la coulée de l'alliage, que l'ouverture dans le boîtier (17) et la vis pour coulée (19) présentent chaque fois une surface d'étanchement (22, resp. 21) afin d'éviter que l'alliage rentre dans l'intérieur du boîtier de la partie à ancrer et dans les pas de vis (31, 35) pendant la coulée de raccord, et **en ce que** la vis de blocage (18) présente également une surface d'étanchement (21).

2. Eléments de construction selon la revendication 1, **caractérisés en ce que** le filetage (31) sur la vis de blocage et sur la vis pour coulée (18, 19) se trouve à la pointe de ces dernières et à une distance de la surface d'étanchement (21).

3. Eléments de construction selon la revendication 1 ou 2, **caractérisés en ce que** la surface d'étanchement (22) de l'ouverture du boîtier (17) et la surface d'étanchement (21) de la vis de blocage et de la vis pour coulée (18, 19) sont coniques.

4. Eléments de construction selon l'une des revendications 1 à 3, **caractérisés en ce qu'**ils comprennent une glissière extracoronaire avec distributeur de l'effort de cisaillement intégré, composée d'une partie mâle (1) attachable à une dent fixe et d'une partie femelle (11) pouvant être glissée sur la partie mâle et présentant la forme d'un boîtier (17) auquel un élément de prothèse est attachable, la partie mâle (1) comportant une partie de fixation (4) qui présente essentiellement la forme d'un bloc muni d'une rainure de fixation (6) du côté de la dent et d'une rainure de stabilisation (7) dans chacune des faces latérales, ainsi que sur le côté opposé à la rainure de fixation (6), d'une rainure transversale pour la vis de blocage et la vis pour coulée (18, 19), et la partie femelle (11) comportant une paroi annulaire (12) et des nervures de connexion (13) coopérant avec lesdites rainures de stabilisation (7), et **en ce que** la vis de blocage ou la vis pour coulée (18, 19) sont adaptées à être vissées dans le boîtier (17) de la partie femelle.

5. Eléments de construction selon la revendication 4, **caractérisés en ce que** l'ouverture dans le boîtier (17) est un alésage traversant (24) pouvant sélectivement recevoir la vis de blocage ou la vis pour coulée (18, 19) sur les deux côtés, et que cet alésage est fermé par un couvercle de fermeture (32) muni d'un taraudage (35) destiné à recevoir le filetage (31) sur la vis de blocage ou la vis pour coulée (18, 19) .

6. Eléments de construction selon la revendication 5, **caractérisés en ce que** le couvercle présente un épaulement (36) et le boîtier une face correspondante (37) afin d'éviter, conjointement aux surfaces d'étanchement (21, 22) de la vis pour coulée et de l'ouverture du boîtier, l'entrée de matiériau dans l'intérieur du boîtier.

7. Eléments de construction selon la revendication 4, **caractérisés en ce que** l'ouverture dans le boîtier (17) est un trou borgne muni à son extrémité d'un taraudage destiné à recevoir la vis de blocage ou la vis pour coulée (18, 19).

8. Eléments de construction selon l'une des revendications 4 à 7, **caractérisés en ce que** la vis de blocage (18) comporte une partie centrale présentant une surface de verrouillage conique (29) suivie d'une surface cylindrique (30) destinée à coopérer avec la rainure transversale (10) dans la partie mâle (1).

9. Eléments de construction selon l'une des revendications 4 à 8, **caractérisés en ce que** la vis pour coulée (19) comporte une partie de maniement (39) qui s'élargit à partir de la surface d'étanchement (21) vers son extrémité.

10. Eléments de construction selon l'une des revendications 4 à 9, **caractérisés en ce que** les vis, particulièrement la vis pour coulée (19), présente un coefficient de dilatation thermique égal ou inférieur à celui du boîtier.

11. Eléments de construction selon l'une des revendications 4 à 10, **caractérisés en ce que** la partie mâle (1), la partie femelle (11) et le couvercle de fermeture (32) sont fabriqués en un alliage exempt de palladium et de cuivre, et que la vis de blocage (18) est en titane pur.
